# EUROPEAN PATENT SPECIFICATION

(11) **EP 0 256 149 B1**
(45) Date of publication and mention of the grant of the patent: **26.05.1993**
(21) Application number: 86111200.1
(22) Date of filing: 13.08.1986
(51) Int. Cl.: G05B 19/403

(54) **Computer system**
Datenverarbeitungsanlage
Système d'ordinateur

(43) Date of publication of application: 24.02.1988
(73) Proprietor: TOSHIBA KIKAI KABUSHIKI KAISHA, Tokyo-To (JP)
(72) Inventor: Sasaki, Yoshinari c/o Toshiba Kikai K.K., Numazu-Shi Shizuoka-Ken (JP); Oda, Etsuji c/o Toshiba Kikai K.K., Numazu-Shi Shizuoka-Ken (JP); Kurita, Naoki c/o Toshiba Kikai K.K., Numazu-Shi Shizuoka-Ken (JP); Kaneko, Toshihiko c/o Toshiba Kikai K.K., Numazu-Shi Shizuoka-Ken (JP)
(74) Representative: Reichel, Wolfgang, Dipl.-Ing.

(56) References cited:
- US-A- 4 118 776

## Description

This invention relates to a computer system for executing three types of parallel processing instructions consisting of an open instruction, a close instruction and a pause instruction.

A sequence control and a servo-control have been effected by a programmable controller (PC) or a computerized numerical controller (CNC). However, these control systems involve certain problems at the time of programming. For example, in the case of the PC, since programs are prepared with ladder circuits, there is a large defect that the programs cannot be prepared in the same manner as a general purpose computer. More particularly, when a program is prepared using ladder circuits, it is difficult to prepare a program for such circuit as a sequence circuit wherein the result differs depending upon the past or preceding state of the circuit. Even if such program could be prepared, preparation of such complicated program including many contents as a computer program is much more difficult. In addition, assisting means for preparing a program that it means for automatically preparing a portion of the program and programming technique are much inferior to those of the high grade general purpose computer so that such means and technique cannot be used for the PC.

Since the control speed of the PC is limited by the cycle time thereof, a high response speed of less than several milliseconds cannot be obtained. Moreover, as the number of input/output ports of the PC is also limited, in many cases inputting and outputting of numerical data become impossible. Furthermore, with the PC it is difficult to judge conditions including an arithmetic computation. As a result, it has been difficult to directly control a sequence system and a servo-system by using the PC.

In the case of a CNC, since it utilizes a computer, not only the hardware but also the software of the system becomes complicated. For this reason, it is difficult to prepare a program or modify a sequence for a mechanical engineer or a field engineer not skilled in software. For the purpose of obviating the difficulty caused by using system words, although a system utilizing macro-instruction sets which are exclusively used for sequence controls has been proposed, prior art macro-instruction sets are interpreters so that there are such problems that the execution speed of the sequence is low and that the performance is limited.

Although a computer system utilizing first and second programs and suitable for effecting a sequence control and a servo-control has been described in US-A 4 118 776, it does not teach execution of the first and second programs in parallel and at the same time. In the prior art computer system utilizing a number of programs, the programs are executed sequentially so that the entire processing time increases with the number of programs used.

Accordingly, it is an object of this invention to provide a computer system using first and second programs and capable of effecting a sequence control or a servo-control with higher operating speed and with such languages as BASIC and FORTRAN other than conventional system languages, particulary a computer system capable of decreasing the number of flags, timers, etc., thus simplifying the programs.

According to this invention, this object is achieved by means of a computer control system comprising a central processing unit (CPU); a timer comprising a counter renewed by a definite count at each definite interval and connected to the CPU to be read thereby; a program memory for storing programs of a sequence control and a servo control to be executed by the CPU; a program counter connected to the CPU and the program memory for designating an address of said program memory, the address storing an instruction to be executed next, a content of the program counter being renewed according to a type of an instruction to be executed by the CPU; an address table connected to the CPU and the program counter for registering addresses of programs designated by an open instruction and pause instruction, registered addresses of the address table being searched and erased in accordance with a close instruction; a time table connected to the CPU and written with a predetermined time for starting the execution of a program registered in the address table; and a pointer connected between the address table and the time table and to the CPU for scanning corresponding portions of the address table and the time table.

Alternatively this computer control system comprises a central processing unit (CPU); an interruption clock which applies an interruption signal to the CPU at a predetermined interval; a program memory for storing programs of a sequence control and a servo-control to be executed by the CPU; a program counter connected to the CPU and the program memory for designating an address of the program memory, the address storing an instruction to be executed next, and content of the program counter being renewed according to a type of an instruction to be executed by the CPU; a plurality of service circuits connected to the CPU and the program counter, each service circuit including an address table connected to the program counter, a service pointer, a top pointer and a catalogue pointer, the pointers being connected to the address table; and a pause pointer controlled by the CPU for selecting one of the service circuits having a shortest pause time at an initial state; the address table being connected to the program counter for registering addresses of programs designated by an open instruction and a pause instruction; registered addresses of the address table being searched and erased in accordance with a close instruction; addresses registered in the address table and designated by the service pointer being transferred to the program counter; the service pointer designating a position of the address table storing an address of a program now being served; the top pointer denoting a leading address of a program to be served and stored in the address table; and the catalogue pointer denoting a position of the address table written by an open instruction and a pause instruction.

Further developments of the invention are given by the features of the subclaims.

Preferred embodiments of the invention are described by way of example with reference to the drawings, in which
Fig. 1 is a flow chart showing the operation of an open instruction;
Figs. 2 and 3 are flow charts for explaining the operation of a close instruction;
Fig. 4 is a flow chart for explaining the operation of a pause instruction;
Figs. 5 and 6 are flow charts showing examples of servo-control programs utilizing an open instruction, a close instruction and a pause instruction respectively;
Fig. 7 is a block diagram showing a computer system embodying the invention; and
Fig. 8 is a block diagram showing a modified embodiment of the invention.

In this invention, system languages are not used as programming languages for sequence controls and servo-controls, but such languages as BASIC and FORTRAN that can readily be used by persons not skilled in software technique of a computer system are used. If necessary, system languages can also be used together with such words.

When such languages are used, as the operations speed of a mechanism is lower than that of a computer, when preparing a program there arises a problem. More particularly, as there are many waiting times in a program, during the waiting times the computer is obliged to execute loops so that the computer becomes idle. To accurately determine the waiting time it is necessary to use many flags and timers, thus complicating the program.

A program utilizing parallel processings proposed to solve this problem can be prepared with system languages, but languages such as BASIC and FORTRAN cannot be used. This invention solves this problem by using three types of parallel processing instructions comprising an open instruction, a close instruction and a pause instruction.

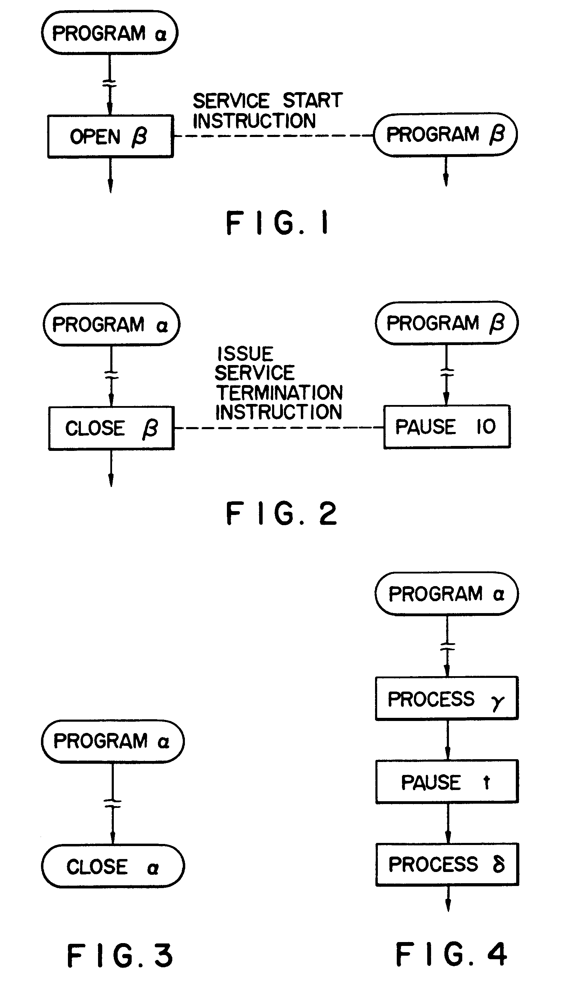

The operation of an open instruction "OPEN β" is shown by a flow chart in Fig. 1. The open instruction OPEN β starts an execution of a program β different from a program a now being executed. After executing this instruction, programs α and β are simultaneously executed in parallel. Although in the sequence control, a number of sequences are executed in parallel at the same time and in such a case the parallel processings are executed by using the open instruction.

The operation of the close instruction "CLOSE β" is shown in Figs. 2 and 3. The close instruction forcibly terminates program β now being executed in parallel in accordance with program α . Execution of program β forcibly terminates using an instruction now being executed when the close instruction has been executed. Where there are a plurality of tasks executed by the same program, for example, where a plurality of programs β are processed in parallel, executions of all programs are forcibly terminated. Where the close instruction CLOSE β is used, supervision of completions of processings and the terminations of processings can be made by a program exclusively used for this purpose. The close instruction can also be used for terminating own program.

The operation of the pause instruction "PAUSE t" is shown in Fig. 4. Upon execution of this instruction, the execution of the program α is interrupted for an interval (of the order of milliseconds) determined by this parameter, and the following processing is resumed. Assume that the parameter t is "35", after executing processing γ the execution of the program α is interrupted for 35 milliseconds (ms), and then the execution of the program α is resumed, thus executing a processing δ. During the execution of the pause instruction PAUSE t, executions of the other programs are continued without being interrupted. By using the pause instruction PAUSE t, a time necessary for waiting for the completion of mechanical operations and input/output can be provided without providing a special timer. Different from a case in which a processing is caused to wait by using a loop, it is not necessary to cause the processings of other sequences to wait during interruption.

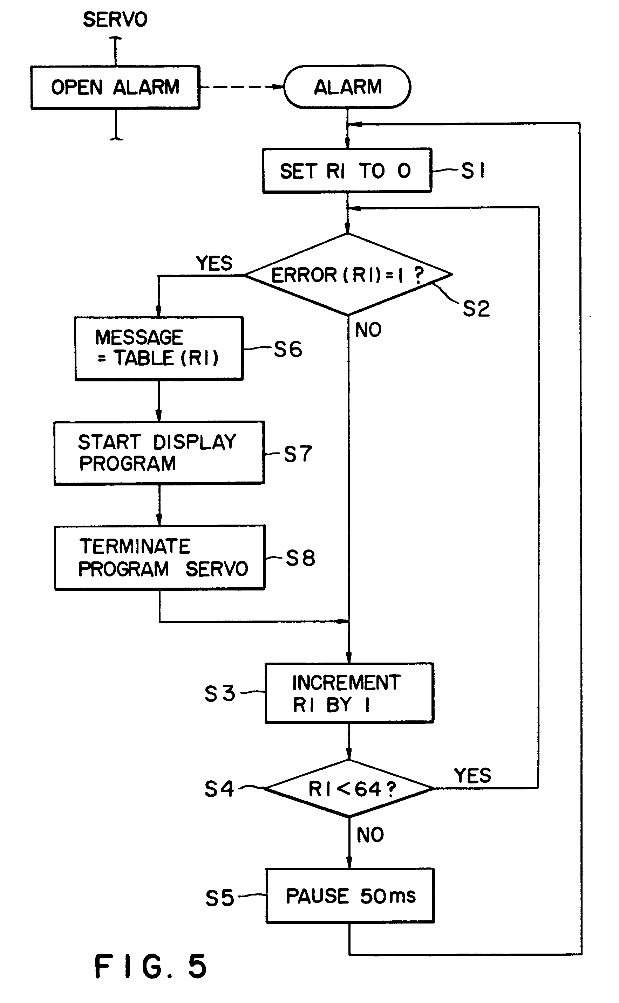

A method of effecting a sequence control and a servo-control by using three parallel processing instructions including an open instruction, a close instruction and a pause instruction described above, will be described with reference to a flow chart shown in Fig. 5.

A subprogram ALARM shown in the flow chart normally supervises an error flag in a program SERVO for producing a message when an error occurs in the program. In the program SERVO, when an error occurs, the value of an element in an arrangement ERROR is set to "1" depending upon the type of the error. Error messages to be displayed for respective elements in an arrangement ERROR are prestored in corresponding elements in an arrangement TABLE. A subprogram ALARM is started by using an open instruction OPEN ALARM in the main program and executed in parallel with the program SERVO. Upon starting, at step S1, a variable R1 is set to "0". After that, at step S2, a judgement is made as to whether an element ERROR (R1) in arrangement ERROR has been set to "1" or not. When the result of judgement is NO, at step S3, the variable R1 is incremented by 1 for the purpose of checking the next element in arrangement ERROR for repeating the same operation. When all elements of 35 arrangements ERROR are not "1", meaning that no error was found, at step S5, after awaiting for 50 ms in accordance with a pause instruction PAUSE 50, the same processings are repeated.

At step S2, when it is judged that ERROR (R1) has been set to "1", at step S6, a message in an arrangement TABLE corresponding to an element which has been changed to "1" in arrangement ERROR is substituted for a variable MESSAGE in accordance with an instruction MESSAGE = TABLE (R1). Then at step S7, a display program is started by an open instruction OPEN DISPLAY for displaying a message stored in an arrangement VARIABLE. A program SERVO in which an error has occurred is terminated at step S8 by a close instruction CLOSE SERVO. By using parallel processing programs comprising an open instruction, a close instruction and a pause instruction, an error check at an interval of 50 ms, an error display and termination of a program in which an error has occurred can be made independently of the program SERVO.

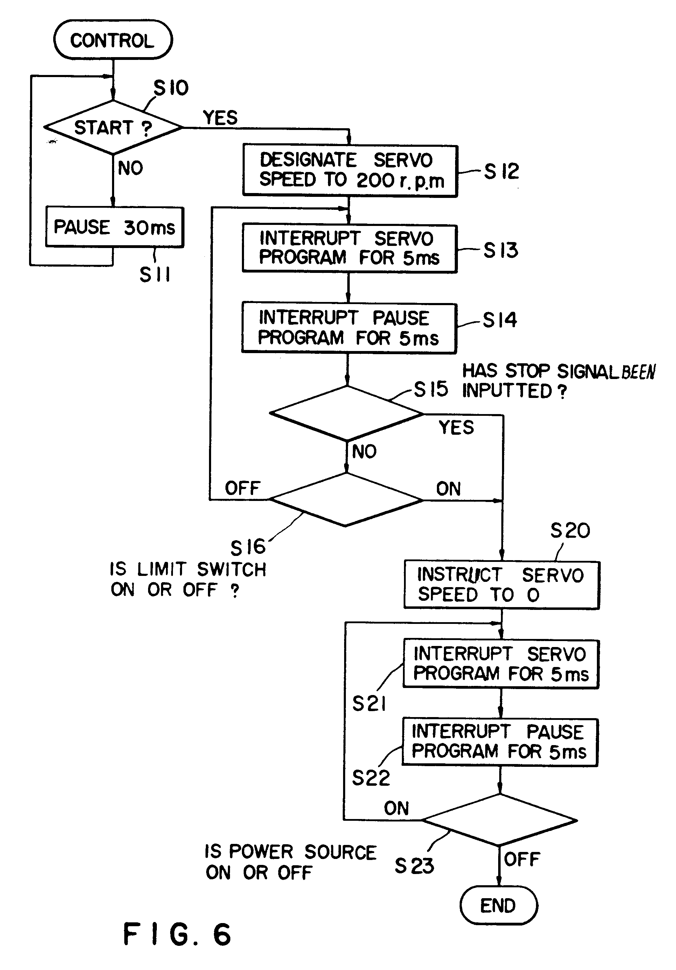

An example of a program for controlling a servo-system and sequence system will now be described with reference to a flow chart shown in Fig. 6.

In the program, at steps S10 and S11 a start signal is constantly checked at an interval of 30 ms. When a start signal is detected at step S10, at step S12, the speed of the servo-system is designated to 200 r.p.m. At steps S13 and S14 the servo-program is opened every 5 ms. At steps S15 and S16, judgements are made as to whether a stop signal is inputted and whether a limit switch is ON or OFF. Where there is no stop signal and the limit switch is OFF, the program is returned to step S13, thereby repeating steps S13, S14, S15 and S16. When the stop signal is detected or the limit switch is ON, at step S20, the speed of the servo-system is instructed to be O_{r.p.m.}. After that, at steps S21 and S22, the servo-program is opened every 5 ms. Then at step S23, a check is made as to whether a power source is OFF or ON.

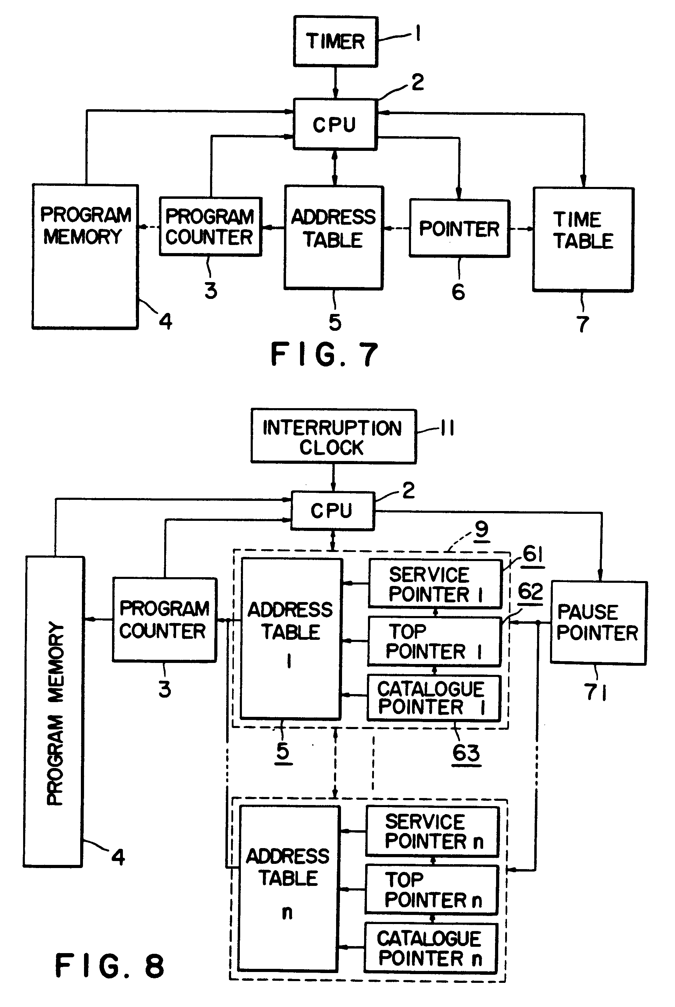

As above described, by adding an open instruction, a close interruption and a pause instruction to such languages as BASIC and FORTRAN, a sequence control and a servo-control can be made readily. A computer system for introducing these parallel processing instructions will be described with reference to a block diagram shown in Fig. 7.

The central processing unit (CPU) 2 is connected to a program counter 3 and a program memory device 4. The program counter 3 designates an address of the program memory device 4 storing a program to be executed next, and the CPU 2 processes an address of the program memory device designated by the content of the program counter 3, the content thereof being renewed in accordance with the type of the instruction executed. More particularly, in the case of a conventional instruction, the program counter operates in the same manner as that of a general purpose computer. For an open instruction, the content of the program counter is renewed to an address of an instruction following an open instruction. To terminate a program containing an executed close instruction the content is renewed to an address selected from an address table 5. In other cases the content is renewed to the address of an instruction following the close instruction. In the case of a pause instruction, the content is renewed to an address selected from address table 5. The program memory device 4 stores programs of a sequence control, servo-control or the like to be executed. The address table 5 stores addresses of programs designated by an open instruction and a pause instruction. More particularly, (1) in the case of the open instruction, the address of a program designated by an argument is written into an idle or vacant portion of the table found by scanning the same. The vacant portion of the table is designated by a pointer 6 utilized at the time of scanning. (2) in the case of a pause instruction, the address of an instruction following the pause instruction is written or registered in the address table. The addresses thus written are searched and erased by a close instruction. (3) in the case of a close instruction the address of a program designated by an argument is found and erased as a result of scanning. The registered addresses are erased after being referred to by a close instruction or pause instruction. (4) in the case of the close instruction, after executing the processing of (3), whereas in the case of the pause instruction, after executing the processing of (2), the contents of the time table 7 designated by pointer 6 as a result of scanning are transferred to the program counter 3, and the contents of the address table designated by the pointer 6 are erased.

A timer 1 is connected to CPU 2 and constituted by a counter renewed by a definite count at each definite interval. The contents of the counter are readable by CPU 2 and the read out content corresponds to the count at the time of reading.

The pointer 6 is utilized at the time of scanning the address table 5 and time table 7, the tables 5 and 7 corresponding in one to one relation. Accordingly, the pointer 6 is used in common for both tables and designates corresponding portions of both tables. Further, the pointer 6 is used for writing and reading both tables.

The time table 7 is written with a predetermined time at which the execution of a program registered in the address table starts. The written position is designated by pointer 6 and corresponds to the portion of the address table at which a program is registered. More particularly, (1) in the case of an open instruction, the count of timer 1 corresponds to a predetermined time at which the execution starts. (2) in the case of a pause instruction, the sum of the timer time and a pause time designated by the argument of a pause instruction becomes the predetermined time at which the execution starts.

A method of executing a conventional instruction, an open instruction, a close instruction and a pause instruction according to this invention by using the computer system shown in Fig. 7 will be described as follows.

In the initial state, a sequence control or a servo-control or the like to be executed is stored in the program memory device 4 and the program counter 3 is holding an execution initiation address of the program. The timer 1 is reset by a signal "0". Address table 5 and time table 7 are vacant while pointer 6 is set to point the leading or top addresses of the address table 5 and time table 7. The CPU 2 repeats the operation of taking and executing an instruction at an address held in a program counter. When the written instruction is a conventional instruction other than the open instruction, the close instruction and the pause instruction, the instruction is executed in the same manner as in a conventional computer to renew the content of the program counter 3. When the written instruction is an open instruction, the time table 7 is firstly scanned by pointer 6 so as to find out a vacant portion of the address. Then the value of timer 1 is written into the vacant portion of the time table 7 by CPU 2, and the initial or leading address of the program to be opened is written into the same position as that of the address table 5. After that, the content of the program counter 3 is used to renew the address of an instruction following the open instruction for commencing the execution of the next instruction.

Where the written instruction is a close instruction that terminates a program containing the same, the value of timer 1 is written into CPU 2 and the pointer 6 scans the time table 7 for searching a value smaller than the value of timer 1. In the absence of such value, the value of the timer is written again for repeating the same operation. Upon registration of a value smaller than the value of timer 1, the content of the address table 5 shown by pointer 6 is transferred to program counter 3 so as to erase the contents of time table 7 and address table 5 pointed by pointer 6, whereby the execution of an instruction shown by the content of the program counter 3 is initiated. In this manner, the original program is terminated and the other program is started.

Where an instruction written is a close instruction other than that described above, the pointer 6 scans the address table 5 for erasing a program to be closed as well as the content of the time table 7 at the same position, thereby terminating a program initiated by a close instruction.

Where a written instruction is a pause instruction, pointer 6 causes scanning of the time table 7 for finding out a vacant portion thereof. Then CPU 2 takes in the value of timer 1 and adds the value to a pause time and the sum is written into the vacant portion of the time table 7. Also the address of an instruction succeeding the pause instruction is written in the same position of the address table 5. The execution of the program has been paused by the operation described above, and another program that can be executed during the pause is searched. Thus, the CPU 2 takes in the value of timer 1 and the time table is scanned by the pointer 6 for searching a value smaller than that of timer 1. If such value is absent, the value of timer 1 is read again for repeating the same operation. If a value smaller than that of timer 1 has been registered, the content of the address table 5 denoted by pointer 6 is transferred to program counter 3, and contents of time table 7 and address table 5 denoted by pointer 6 are erased so that execution of an instruction shown by the count of the program counter is commenced. In this manner, the original program is paused and the other programs are executed.

In this manner, the computer system described above can execute not only a conventional instruction but also an open instruction, a close instruction and a pause instruction.

As above described, the open instruction, the close instruction and the pause instruction can be executed based on the value of timer 1. Similar operation can be efficiently made by providing a plurality of service circuits 9 for respective pause instructions as shown in Fig. 8.

As shown, CPU 2 is connected to program counter 3 and program memory device 4, and an instruction of an address stored in the program counter connected to the program memory device 4 is read out and supplied to CPU 2 to be executed thereby. An interruption clock 11 is connected to CPU 2 for applying an interruption to CPU 2 at a definite time interval. Further, CPU 2 is connected to a plurality of service circuits 9, and to a pause pointer 71 which selects one of the service circuits 9. Each service circuit 9 includes an address table 5, a service pointer 61, a top pointer 62 and a catalogue pointer 63. The service circuits are selected by a pause pointer 71 corresponding to a pause time. The interrupt clock 11 applies an interruption to CPU 2 at a definite interval. The CPU 2 determines a time at which the interruption is applied and renews the pause pointer 71 such that one of the service circuits 9 is selected corresponding to the time thus determined.

The purpose of the service pointer 61 is to show the position of the address table 5 storing the address of a program now being served. In the initial state, the service pointer 61 shows the leading position of the address table 5. Upon completion of a program now being served by a close instruction or a pause instruction the service pointer is renewed to the next position. When the renewed content coincides with the content of the top pointer 62, the program would not be executed whereas the content of the service pointer 61 is renewed.

The purpose of the top pointer 62 is to show the position of the address table 5 in which the leading address of a program is to be served. Thus, in the initial state, the top pointer 62 shows the leading poition of the address table. When a service circuit 9 including a top pointer 62 is selected the content thereof is transferred to service pointer 61.

The purpose of the catalogue pointer 63 is to show the position of address table 5 to be written with an instruction in accordance with an open instruction and a pause instruction. Thus in the initial state, the catalogue pointer 63 shows the leading position of the address table 5. Upon execution of an open instruction, the position of the address table is renewed to the next position. When a service circuit 9 containing the catalogue pointer 63 is selected, the content thereof is transferred to top pointer 62.

The purpose of the pause pointer 71 is to select either one of the service circuit 9. Thus, in the initial state, it selects a service circuit 9 having the shortest pause time. When an interruption is applied by interruption clock 11 or when the contents of the service pointer 61 and the top pointer 62 coincide with each other, the pause pointer 71 is renewed. Although there are many methods of renewal, the following method is preferred. More particularly when an interruption is applied the content of the pause pointer 71 is renewed to select a service circuit 9 having the shortest pause time. When the contents of service pointer 61 and top pointer 62 coincide with each other a service circuit corresponding to a pause time of a length next to that of the pause time of a service circuit 9 which has been selected would be selected.

A method of executing an conventional instruction, an open instruction a close instruction, and a pause instruction of this invention by utilizing the computer system shown in Fig. 8 is as follows.

After starting the CPU 2, pause pointer 71 selects one of the service circuits 9 corresponding to a pause time. Pause pointer 71 is set by CPU 2 such that the service circuits 9 are selected corresponding to predetermined puase times which are measured by interruption clock pulses generated by interruption clock 11. The content of top pointer 62 of the selected service circuit 9 is transferred to a service pointer 61, whereas the content of a catalogue pointer 63 is transferred to top pointer 62. An address in the address table 5 designated by service pointer 61 is transferred to program counter 3 so that an instruction stored in program memory device 4 designated by program counter 3 is executed by CPU 2. Thereafter, in the same manner as in a conventional computer, the content of program counter 3 is renewed in accordance with an executed instruction, thereby continuing the service operation.

The operation of executing an open instruction is as follows. A starting address of a program to be opened is registered in address table 5 designated by catalogue pointer 63 of a service circuit 9 designated by an added argument, and the content of the catalogue pointer 63 is renewed to show the next position of the address table 5. The contents of the service pointer 61 and catalogue pointer 63 are renewed to show the head portion of address table 5 when the last portion thereof is reached.

After execution of a close instruction, the address table 5 of a service circuit 9 designated by an added argument is scanned for erasing a program to be closed.

After executing a pause instruction, the next address of the pause instruction is registered on the address table 5 designated by catalogue pointer 63 of a service circuit 9 designated by an added argument. The content of the service pointer 61 of a service circuit 9 selected by pause pointer 71 is renewed to show the next position of the address table 5 for comparing with each other the contents of service pointer 61 and top pointer 62. When the compared contents do not coincide with each other, the program is branched to the operation to be executed after starting the operation of the CPU 2. Upon coincidence, the program is branched to the starting operation described above, whereby CPU 2 renews the pause pointer 71.

As above described, not only an conventional instruction but also an open instruction, a close instruction and a pause instruction can be executed by a computer system shown in Fig. 8.

Although in the embodiment, shown in Fig. 7 the system is constituted by a hardware including address table 5, pointer 6 and time table 7, such system can also be realized with a general purpose computer added with a timer 1 (see Fig. 7) and a suitable software.

As above described according to this invention, a sequence control and a servo-control can be readily performed with languages such as BASIC and FORTRAN languages different from system languages. In addition, as the number of flags and timers can be greatly reduced the programs become simple and clear. Where a high speed operation and a special calculation are required, such system languages as ASSEMBLER can be used at the same time. By realizing the invention by using a hardware having a time table and an address table, an efficient control can be made.

## Claims

1. Computer control system for executing three types of parallel processing instructions consisting of an open instruction, a close instruction and a pause instruction,
**characterized by:**
a central processing unit (CPU) (2);
a timer (1) comprising a counter renewed by a definite count at each definite interval and connected to the CPU (2) to be read thereby;
a program memory (4) for storing programs of a sequence control and a servo control to be executed by the CPU (2);
a program counter (3) connected to the CPU (2) and the program memory (4) for designating an address of said program memory (4), the address storing an instruction to be executed next, a content of the program counter (3) being renewed according to a type of an instruction to be executed by the CPU (2);
an address table (5) connected to the CPU (2) and the program counter (3) for registering addresses of programs designated by an open instruction and pause instruction, registered addresses of the address table (5) being searched and erased in accordance with a close instruction;
a time table (7) connected to the CPU (2) and written with a predetermined time for starting the execution of a program registered in the address table (5); and
a pointer (6) connected between the address table (5) and the time table (7) and to the CPU (2) for scanning corresponding portions of the address table (5) and the time table (7).

2. Computer control system according to claim 1,
**characterized in that**
the content of the program counter (3) is renewed to an address of an instruction succeeding an open instruction, or to an address selected from the address table (5) when a program containing an executed close instruction is terminated, or to an address of an instruction succeeding a close instruction or to an address selected by the address table (5) in accordance with a pause instruction.

3. Computer control system according to claim 1
**characterized in that**
in the case of the open instruction the address table (5) is registered with an address of a program designated by an argument in a vacant portion of the address table (5) found as a result of scanning of the address table (5) effected by the pointer (6).

4. Computer control system according to claim 1,
**characterized in that**
in the case of the pause instruction the address table (5) is registered with an address of an instruction suceeding a pause instruction.

5. Computer control system according to claim 1,
**characterized in that**
in the case of the close instruction an address of a program designated by an argument and registered in the address table (5) is written into an idle portion of the address table (5) and erased as a result of scanning the address table (5).

6. Computer control system according to claim 1,
**characterized in that**
addresses registered in the address table (5) are searched by the pointer (6) and erased by a close instruction.

7. Computer control system according to claim 1,
**characterized in that**
contents of the time table (7) at positions designated by the pointer (6) are transferred to the program counter (3) under the control of the CPU (2) after executing the close or pause instruction, the CPU (2) controlling the time table (7) in accordance with an instruction read out from the program memory (4).

8. Computer control system according to claim 1,
**characterized in that**
the pointer (6) is also used to read and write the address table (5) and the time table (7).

9. Computer control system according to claim 1,
**characterized in that**
the definite interval corresponds to a count of the counter (3) at the time of an open instruction or a sum of the count and a pause time designated by an argument of a pause instruction at the time of a pause instruction.

10. Computer control system for executing three types of parallel processing instructions consisting of an open instruction, a close instruction and a pause instruction,
**characterized by:**
a central processing unit (CPU) (2);
an interruption clock (11) which applies an interruption signal to the CPU (2) at a predetermined interval;
a program memory (4) for storing programs of a sequence control and a servo-control to be executed by the CPU (2);
a program counter (3) connected to the CPU (2) and the program memory (4) for designating an address of the program memory (4), the address storing an instruction to be executed next, and content of the program counter (3) being renewed according to a type of an instruction to be executed by the CPU (2);
a plurality of service circuits (9) connected to the CPU (2) and the program counter (3), each service circuit including an address table (5) connected to the program counter (3), a service pointer (61), a top pointer (62) and a catalogue pointer (63), the pointers being connected to the address table (5); and
a pause Pointer (71) controlled by the CPU (2) for selecting one of the service circuits (9) having a shortest pause time at an initial state;
the address table (5) being connected to the program counter (3) for registering addresses of programs designated by an open instruction and a pause instruction;
registered addresses of the address table (5) being searched and erased in accordance with a close instruction;
addresses registered in the address table (5) and designated by the service pointer being transferred to the program counter;
the service pointer (61) designating a position of the address table (5) storing an address of a program now being served;
the top pointer (62) denoting a leading address of a program to be served and stored in the address table (5); and
the catalogue pointer (63) denoting a position of the address table (5) written by an open instruction and a pause instruction.

11. Computer control system according to claim 10,
**characterized in that**
the CPU (2) determines a time at which the interruption signal is applied so as to renew the pause pointer (71) such that the same selects one of the service circuits (9) in accordance with pause time.

12. Computer control system according to claim 10,
**characterized in that**
a content of the service pointer (61) is renewed to a next position upon completion of program now being served by a close instruction and a pause instruction.

13. Computer control system according to claim 12,
**characterized in that,**
when a renewed content of the service pointer (61) coincides with a content of the top pointer (62), no program is executed and the content of the service pointer (61) is renewed.

14. Computer control system according to claim 10,
**characterized in that**
a service circuit (9) containing a given top pointer (62) is selected by the pause pointer (71), and a content of said top pointer (62) is transferred to the service pointer (61).

15. Computer control system according to claim 10,
**characterized in that**
a service circuit (9) containing a given catalogue pointer (63) is selected by the pause counter (71), and a content of the catalogue pointer (63) is transferred to the top pointer (62).

16. Computer control system according to claim 10,
**characterized in that**
the pause pointer (71) is renewed when an interruption signal is applied to the CPU (2) or when contents of the service pointer (61) and the top pointer (62) coincide with each other.

## Patentansprüche

1. Computersteuersystem zum Ausführen von drei Arten von Parallelverarbeitungsbefehlen, bestehend aus einem Öffnungsbefehl, einem Schließbefehl und einem Pausebefehl,
**gekennzeichnet durch:**
eine zentrale Verarbeitungseinheit (CPU) (2);
einen Zeitgeber (1) mit einem Zähler, der in jedem definierten Intervall auf einen neuen definierten Zählwert eingestellt wird und mit der CPU verbunden ist, um von dieser gelesen zu werden;
einen Programmspeicher (4) zum Speichern von Programmen einer Sequenzsteuerung und einer Servosteuerung, die von der CPU ausgeführt werden sollen;
einen Programmzähler (3), der mit der CPU (2) und dem Programmspeicher (4) verbunden ist, um eine Adresse des Programmspeichers (4) zu bestimmen, wobei die Adresse einen als nächsten auszuführenden Befehl speichert und der Inhalt des Programmzählers (3) in Abhängigkeit von der Art eines als nächsten von der CPU auszuführenden Befehls erneuert wird;
eine Adressentabelle (5), die mit der CPU (2) und dem Programmzähler (3) verbunden ist, um Adressen von Programmen zu registrieren, die durch einen Öffnungsbefehl und einen Pausebefehl bestimmt sind, wobei registrierte Adressen der Adressentabelle in Abhängigkeit von einem Schließbefehl aufgesucht und gelöscht werden;
einer Zeittabelle (7), die mit der CPU (2) verbunden und in der eine vorbestimmte Zeit für den Beginn der Ausführung eines in der Adressentabelle (5) registrierten Programms aufgezeichnet ist;
und einem Hinweiser (6), der zwischen die Adressentabelle (5) und die Zeittabelle (7) geschaltet und mit der CPU (2) verbunden ist, um entsprechende Teile der Adressentabelle (5) und der Zeittabelle (7) abzutasten.

2. Computersteuersystem nach Anspruch 1,
**dadurch gekennzeichnet,** daß der Inhalt des Programmzählers (3) auf eine Adresse eines Befehls neu eingestellt wird, der einem Öffnungsbefehl folgt, oder auf eine Adresse, die aus der Adressentabelle (5) ausgewählt wird, wenn ein Programm, das einen ausgeführten Schließbefehl enthält, beendet wird, oder auf eine Adresse eines Befehls, der einem Schließbefehl folgt, oder auf eine Adresse, die durch die Adressentabelle (5) in Übereinstimmung mit einem Pausebefehl ausgewählt wird.

3. Computersteuersystem nach Anspruch 1,
**dadurch gekennzeichnet**, daß im Falle des Öffnungsbefehls in der Adressentabelle (5) eine Adresse eines Programms registriert ist, die durch ein Argument in einem vakanten Teil der Adressentabelle (5) bestimmt ist, der als Ergebnis der Abtastung der Adressentabelle (5) durch den Hinweiser (6) aufgefunden wurde.

4. Computersteuersystem nach Anspruch 1,
**dadurch gekennzeichnet**, daß im Falle des Pausebefehls in der Adressentabelle (5) eine Adresse eines auf einen Pausebefehl folgenden Befehls registriert ist.

5. Computersteuersystem nach Anspruch 1,
**dadurch gekennzeichnet**, daß im Falle des Schließbefehls eine Adresse eines Programms, die durch ein Argument bestimmt und in der Adressentabelle (5) registriert ist, in einen freien Teil der Adressentabelle (5) eingeschrieben und als Ergebnis der Abtastung der Adressentabelle (5) gelöscht wird.

6. Computersteuersystem nach Anspruch 1,
**dadurch gekennzeichnet**, daß die in der Adressentabelle (5) registrierten Adressen durch den Hinweiser (6) aufgesucht und durch einen Schließbefehl gelöscht werden.

7. Computersteuersystem nach Anspruch 1,
**dadurch gekennzeichnet,** daß der Inhalt der Zeittabelle (7) an Positionen, die durch den Hinweiser (6) bestimmt werden, in dem Programmzähler (3) unter der Steuerung der CPU (2) nach der Ausführung des Schließ- oder Pausebefehls übertragen werden, wobei die CPU (2) die Zeittabelle (7) in Übereinstimmung mit einem aus dem Programmspeicher (4) ausgelesenen Befehl steuert.

8. Computersteuersystem nach Anspruch 1,
**dadurch gekennzeichnet**, daß der Hinweiser (6) ebenfalls zum Lesen der und Einschreiben in die Adressentabelle (5) und die Zeittabelle (7) verwendet wird.

9. Computersteuersystem nach Anspruch 1,
**dadurch gekennzeichnet,** daß das definierte Intervall dem Zählwert eines Zählers (3) zur Zeit eines Öffnungsbefehls oder der Summe des Zählwerts und einer Pausenzeit, die durch ein Argument eines Pausebefehls zur Zeit eines Pausebefehls bestimmt wird, entspricht.

10. Computersteuersystem zum Ausführen von drei Arten von Parallelverarbeitungsbefehlen, bestehend aus einem Öffnungsbefehl, einem Schließbefehl und einem Pausebefehl,
**gekennzeichnet durch:**
eine zentrale Verarbeitungseinheit (CPU) (2);
einen Unterbrechungstaktgeber (11), der der CPU (2) in einem vorbestimmten Intervall ein Unterbrechungssignal zuführt;
einen Programmspeicher (4) zum Speichern von Programmen einer Sequenzsteuerung und einer Servosteuerung, die von der CPU ausgeführt werden sollen;
einen mit der CPU (2) und dem Programmspeicher (3) verbundenen Programmzähler (3) zur Bestimmung einer Adresse des Programmspeichers (4), die einen als nächsten auszuführenden Befehl speichert, wobei der Inhalt des Programmzählers (3) in Abhängigkeit von der Art eines durch die CPU (2) auszuführenden Befehls erneuert wird;
eine Vielzahl von Serviceschaltungen (9), die mit der CPU (2) und dem Programmzähler (3) verbunden sind, wobei jede Serviceschaltung eine mit dem Programmzähler (3) verbundene Adressentabelle (5), einen Servicehinweiser (61), einen Haupthinweiser (62) und einen Kataloghinweiser (63) aufweist und die Hinweiser mit der Adressentabelle (5) verbunden sind;
und einen Pausenhinweiser (71), der durch die CPU (2) gesteuert wird, um eine der Serviceschaltungen (9) auszuwählen, die die kürzeste Pausenzeit in einem Anfangszustand aufweist;
wobei die Adressentabelle (5) mit dem Programmzähler (3) verbunden ist, um Adressen von Programmen zu registrieren, die durch einen Öffnungsbefehl und einen Pausebefehl bestimmt werden;
registrierte Adressen der Adressentabelle (5) in Abhängigkeit von einem Schließbefehl aufgesucht und gelöscht werden;
in der Adressentabelle (5) registrierte und durch den Servicehinweiser bestimmte Adressen in den Programmzähler übertragen werden;
der Servicehinweiser (61) eine Position der Adressentabelle (5) bestimmt, die eine Adresse eines gerade bedienten Programms speichert;
der Haupthinweiser (62) eine Leit- oder Anfangsadresse eines Programms, das bedient werden soll und in der Adressentabelle (5) gespeichert ist, bestimmt und
der Kataloghinweiser (63) eine Position in der Adressentabelle (5) bezeichnet, in der ein Öffnungsbefehl und ein Pausenbefehl aufgezeichnet sind.

11. Computersystem nach Anspruch 10,
**dadurch gekennzeichnet**, daß die CPU (2) eine Zeit bestimmt, zu der das Unterbrechungssignal zugeführt wird, um den Pausenhinweiser (71) zu erneuern, so daß dieser eine der Serviceschaltungen (9) in Übereinstimmung mit der Pausenzeit auswählt.

12. Computersteuersystem nach Anspruch 10,
**dadurch gekennzeichnet**, daß der Inhalt des Servicehinweisers (61) nach Abschluß eines gerade durch einen Schließbefehl und einen Pausebefehl ausgeführten Programms neu auf eine nächste Position eingestellt wird.

13. Computersteuersystem nach Anspruch 12,
**dadurch gekennzeichnet**, daß, wenn ein erneuerter Inhalt des Servicehinweisers (61) mit dem Inhalt des Haupthinweisers (62) übereinstimmt, kein Programm ausgeführt und der Inhalt des Servicehinweisers (61) erneuert wird.

14. Computersteuersystem nach Anspruch 10,
**dadurch gekennzeichnet**, daß eine Serviceschaltung (9), die einen vorgegebenen Haupthinweiser (62) enthält, durch den Pausenhinweiser (71) ausgewählt und der Inhalt des Haupthinweisers (62) in den Servicehinweiser (61) übertragen wird.

15. Computersteuersystem nach Anspruch 10,
**dadurch gekennzeichnet**, daß eine Serviceschaltung (9), die einen vorgegebenen Kataloghinweiser (63) enthält, durch den Pausenhinweiser (71) ausgewählt und der Inhalt des Kataloghinweisers (63) in den Haupthinweiser (62) übertragen wird.

16. Computersteuersystem nach Anspruch 10,
**dadurch gekennzeichnet,** daß der Pausenhinweiser (71) erneuert wird, wenn ein Unterbrechungssignal der CPU (2) zugeführt wird oder der Inhalt des Servicehinweisers (61) mit dem des Haupthinweisers (62) übereinstimmt.

## Revendications

1. Système de commande par ordinateur pour exécuter trois types d'instructions de traitement en parallèle comprenant une instruction d'ouverture, une instruction de clôture et une instruction de pause, caractérisé en ce qu'il comprend :
une unité centrale de traitement (UC) (2) ;
un rythmeur (1) comprenant un compteur rétabli par un compte défini à intervalles déterminés et connecté à l'unité centrale (2) pour qu'elle le lise ;
une mémoire programmes (4) pour stocker des programmes d'une commande séquentielle ou d'une servo-commande à exécuter par l'unité centrale (2) ;
un compteur de programme (3) connecté à l'unité centrale (2) et à la mémoire programmes (4) afin de désigner une adresse dans ladite mémoire programme (4), l'adresse contenant l'instruction à exécuter ensuite, le contenu du compteur de programmes (3) étant rétabli en fonction du type d'instructions à exécuter par l'unité centrale (2),
un tableau d'adresses (5) connecté à l'unité centrale (2) et au compteur de programmes (3) pour enregistrer les adresses des programmes désignés par une instruction d'ouverture et une instruction de pause, les adresses enregistrées dans le tableau d'adresses (5) étant recherchées et effacées en fonction d'une instruction de clôture ;
un tableau des temps (7) connecté à l'unité centrale (2) dans lequel est inscrit un instant prédéterminé pour le début de l'exécution d'un programme enregistré dans le tableau des adresses (5) ; et
un pointeur (6) connecté entre le tableau des adresses (5) et le tableau des temps (7) et l'unité centrale (2) pour balayer les parties correspondantes du tableau des adresses (5) et du tableau des temps (7).

2. Système de commande par ordinateur selon la revendication 1, caractérisé en ce que le contenu du compteur des programmes (3) est ramené à l'adresse d'une instruction qui suit une instruction d'ouverture, ou à une adresse sélectionnée dans le tableau des adresses (5) lorsqu'un programme contenant une instruction de clôture exécutée est arrêté, ou à une adresse d'une instruction suivant une instruction de clôture ou à une adresse sélectionnée par le tableau des adresses (5) conformément à une instruction de pause.

3. Système de commande par ordinateur selon la revendication 1, caractérisé en ce que, dans le cas d'une instruction d'ouverture, on enregistre dans le tableau des adresses (5) une adresse d'un programme désigné par un argument dans une position vacante du tableau des adresses (5) trouvée par le balayage du tableau des adresses (5) exécuté par le pointeur (6).

4. Système de commande par ordinateur selon la revendication 1, caractérisé en ce que, dans le cas d'une instruction de pause, on enregistre dans le tableau des adresses (5) une adresse d'une instruction suivant une instruction de pause.

5. Système de commande par ordinateur selon la revendication 1, caractérisé en ce que, dans le cas d'une instruction de clôture, une adresse d'un programme désignée par un argument et enregistrée dans le tableau d'adresses (5) est inscrite dans une partie vacante du tableau d'adresses (5) et effacée à la suite du balayage du tableau d'adresses (5).

6. Système de commande par ordinateur selon la revendication 1, caractérisé en ce que les adresses enregistrées dans le tableau des adresses (5) sont recherchées par le pointeur (6) et effacées par une instruction de clôture.

7. Système de commande par ordinateur selon la revendication 1, caractérisé en ce que les contenus du tableau des temps (7) dans des positions désignées par le pointeur (6) sont transférées vers le compteur de programmes (3) sous la commande de l'unité centrale (2) après exécution de l'instruction de clôture ou de pause, l'unité centrale (2) commandant le tableau des temps (7) en fonction d'une instruction lue dans la mémoire des programmes (4).

8. Système de commande par ordinateur selon la revendication 1, caractérisé en ce que le pointeur (6) sert également à lire et à écrire dans le tableau des adresses (5) et le tableau des temps (7).

9. Système de commande par ordinateur selon la revendication 1, caractérisé en ce que l'intervalle déterminé correspond à un compte du compteur (3) au moment d'une instruction d'ouverture ou à la somme de ce compte et d'un temps de pause désigné par un argument de l'instruction de pause au moment d'une instruction de pause.

10. Système de commande par ordinateur pour exécuter trois types d'instructions de traitement en parallèle comprenant une instruction d'ouverture, une instruction de clôture et une instruction de pause, caractérisé par
une unité centrale de traitement (UC) (2) ;
une horloge d'interruption (11) qui applique un signal d'interruption à l'unité centrale (2) à intervalles prédéterminés :
une mémoire programmes (4) pour stocker des programmes d'une commande séquentielle et d'une servo-commande à exécuter par l'unité centrale (2) ;
un compteur de programmes (3) relié à l'unité centrale (2) et à la mémoire programmes (4) afin de désigner une adresse de ladite mémoire programme (4), l'adresse contenant l'instruction à exécuter ensuite, le contenu du compteur des programmes (3) étant rétabli en fonction du type de l'instruction à exécuter par l'unité centrale (2);
une pluralité de circuits de service (9) connectés à l'unité centrale (2) et au compteur de programmes (3), chaque circuit de service comprenant un tableau d'adresses (5) connecté au compteur de programmes (3), un pointeur de service (61), un pointeur principal (62) et un pointeur de catalogue (63), les pointeurs étant connectés au tableau d'adresses (5) ; et
un pointeur de pause (71) commandé par l'unité centrale (2) pour sélectionner l'un des circuits de service (9) ayant le temps de pause le plus court à l'état initial ;
le tableau des adresses (5) étant connecté au compteur des programmes (3) pour enregistrer des adresses des programmes désignés par une instruction d'ouverture et une instruction de pause ;
des adresses enregistrées dans le tableau des adresses (5) étant recherchées et effacées en fonction d'une instruction de clôture ;
des adresses enregistrées dans le tableau des adresses (5) et désignées par le pointeur de service étant transférées vers le compteur de programmes ;
le pointeur de service (61) désignant une position du tableau des adresses (5) dans laquelle est stockée une adresse d'un programme devant être desservi ;
le pointeur principal (62) désignant une première adresse d'un programme à desservir qui se trouve stocké dans le tableau des adresses (5) ; et
le pointeur de catalogue (63) désignant une position du tableau des adresses (5) dans laquelle est inscrite une instruction d'ouverture et une instruction de pause.

11. Système de commande par ordinateur selon la revendication 10, caractérisé en ce que l'unité centrale (2) définit un temps auquel le signal d'interruption est appliqué, de manière à rétablir le pointeur de pause (71) pour que ce dernier sélectionne l'un des circuits de service (9) en fonction du temps de pause.

12. Système de commande par ordinateur selon la revendication 10, caractérisé en ce qu'un contenu du pointeur de service (61) est rétabli à la position suivante après l'exécution d'un programme actuellement desservi par une instruction de clôture et une instruction de pause.

13. Système de commande par ordinateur selon la revendication 12, caractérisé en ce que, au moment où un contenu rétabli du pointeur de service (61) coïncide avec un contenu du pointeur principal (62), aucun programme n'est exécuté et le contenu du pointeur de service (61) est rétabli.

14. Système de commande par ordinateur selon la revendication 10, caractérisé en ce qu'un circuit de service (9) contenant un pointeur principal donné (62) est sélectionné par le pointeur de pause (71), et un contenu dudit pointeur principal (62) est transféré au pointeur de service (61).

15. Système de commande par ordinateur selon la revendication 10, caractérisé en ce qu'un circuit de service (9) contenant un pointeur de catalogue donné (63) est sélectionné par le compteur de pause (71), et un contenu du pointeur de catalogue (63) transféré vers le pointeur principal (62).

16. Système de commande par ordinateur selon la revendication 10, caractérisé en ce que le pointeur de pause (71) est rétabli lorsqu'un signal d'interruption est appliqué à l'unité centrale (2) ou lorsque les contenus du pointeur de service (61) et du pointeur principal (62) coïncident entre eux.
